# EUROPEAN PATENT SPECIFICATION

(11) **EP 2 512 121 B1**
(45) Date of publication and mention of the grant of the patent: **05.06.2013**
(21) Application number: 11162211.4
(22) Date of filing: 13.04.2011
(51) Int. Cl.: H04N 5/235, H04N 5/225, G03B 15/03

(54) **Illumination device**
Beleuchtungsvorrichtung
Dispositif d'illumination

(43) Date of publication of application: 17.10.2012
(73) Proprietor: Axis AB, 223 69 Lund (SE)
(72) Inventor: Fransson, Kent, SE-215 66 Malmö (SE)
(74) Representative: Bratt, Hanna Catharina

(56) References cited:
- WO-A1-2010/040197
- WO-A2-2011/024193
- GB-A- 2 454 457
- US-A1- 2005 168 965
- US-A1- 2006 221 206
- US-A1- 2008 151 052
- US-B2- 7 088 525

## Description

### Technical field

The present invention relates to a PTZ camera comprising an illumination device for illuminating a scene monitored by the camera, and to a method of illuminating a scene monitored by a PZT camera.

### Background art

Surveillance cameras used to monitor a specific setting may from time to time need additional lighting to be able to give a good picture of the environment that they are used to monitor. This is for instance the case during night time in an outdoor setting when the natural light is insufficient for the camera or in an indoor situation when, e.g. for energy saving purposes, the lights are switched off. Some type of lighting can then be used in combination with the surveillance camera. A common choice is to use light emitting diodes, LEDs, emitting infrared or white light, for illuminating the scene which is monitored by the surveillance camera. The LEDs may be mounted in external units or integrated in the camera housing or the camera's mechanical structure.

In a camera having a movable camera head that can pan, tilt, and zoom, a so called PTZ camera, it is of interest that the illumination is able to cover the different viewing angles of the camera head. This can be solved by mounting the LEDs on the camera head so that the illumination follows the movement of the camera head and points in the viewing direction of the camera head.

However, a problem when mounting the LEDs on the camera head is that the LEDs will then be closely placed to the imaging sensor, which in turn means that the heat generated by the LEDs can negatively impact the performance of the imaging sensor. Disturbing reflections when the LEDs are placed close to the camera lens is another problem which may occur when the LEDs are mounted on the camera head. The LEDs also make the camera head bulkier and puts additional requirements on the cabling connecting the base of the camera with the camera head for current feed and control of the LEDs.

One way to reduce the heat which the imaging sensor is exposed to is to place the LEDs used for illumination further away from the imaging sensor and not on the movable camera head, but instead on the base of the camera.

However, a problem occuring when the LEDs are mounted on the camera base is that the illumination of the LEDs then need to cover all possible viewing angles of the camera head. Illuminating the whole scene implies that a large number of LEDs is needed and that a large amount of input power is needed to operate the LEDs, this in turn generating more heat.

WO-A2-2011/024193 discloses an IR illuminator having multiple groups of IR-LEDs with different illumination angles. The IR illuminator may be adjusted based on the zoom level of a CCTV camera.

Thus, there is a need for an improved illumination solution for surveillance cameras.

### Summary of the invention

It is an object of the present invention to provide an illumination solution that alleviates the above problems regarding heat generation and power consumption, and to provide an illumination solution where the illumination provided by an illumination device may be efficiently controlled to match the need for illumination for a camera.

This and further objects are achieved by a PTZ camera having the features as defined in claim 1, preferred embodiments being defined in the dependent claims.

A method of illuminating a scene monitored by a PZT camera having a camera head movably mounted on a camera comprises the steps in accordance with claim 9.

### Brief description of the drawings

The invention will now be described in more detail by way of example and with reference to the accompanying schematic drawings, in which:
Fig. 1 shows a side view of a horizontally mounted camera.
Fig. 2 shows the camera in fig. 1 from above.
Fig. 3 shows the camera in a side view when mounted vertically.
Fig. 4 shows a side view of an embodiment of an illumination device according to the invention.
Fig. 5 is a flow chart illustrating a method according to embodiments of the invention.

### Detailed description of the invention

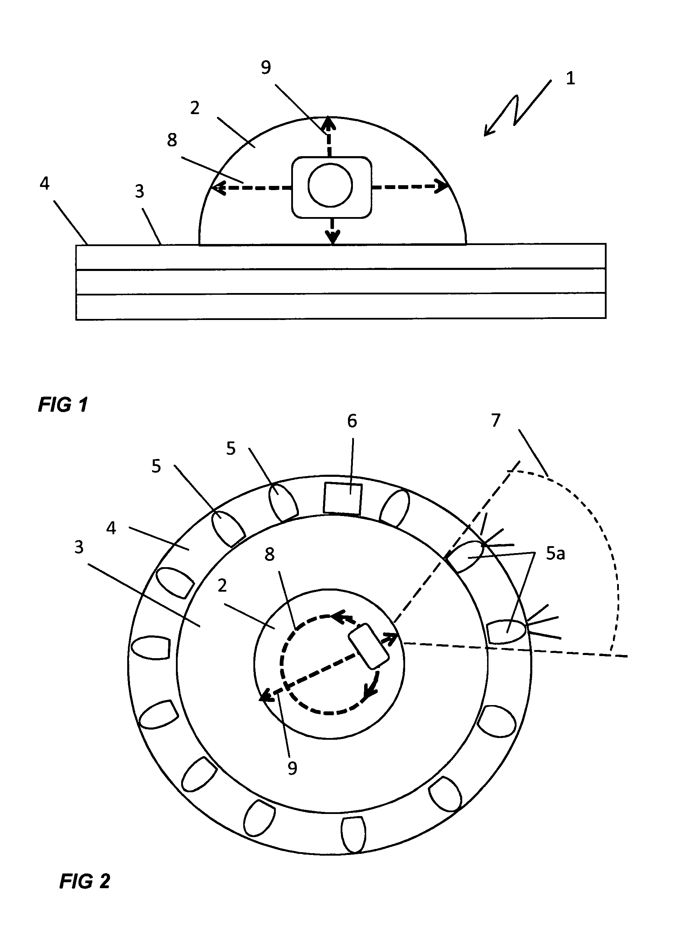

In fig. 1 and 2, a camera 1 having a dome-shaped camera head 2 mounted on a circular camera base 3 is shown. The camera is equipped with an illumination device 4. As shown in fig. 2, the illumination device 4 comprises a numbers of light emitting elements 5, e.g. in the form of LEDs, mounted on the camera base 3. The light emitting elements 5 may be emitting light in the visible or non-visible spectrum, as one example they may be designed for emitting in the infra-red or near infra-red spectrum, and it may be noted that both for visible and non-visible radiation, LEDs are just one example of light emitting elements which could be used. Other possible choices include but are not limited to light bulbs, halogen lamps and gas discharge lamps. The light emitting elements 5 are mounted along the circumference of the camera base 3 and surround the camera head 2. The light emitting elements may be mounted in a ring-shape or partial ring shape, in one or more rows, surrounding at least part of the camera head. The light emitting elements may also be mounted in any suitable position outside the camera base 3, for instance on a separate structure.

The illumination device 4 also comprises a control unit 6, which individually controls the operation of the light emitting elements 5. Physical connections between the light emitting elements 5 and the control unit 6 are not shown on the drawings for the sake of clarity. This control unit may be implemented in software or hardware, and the position on the drawings is not in any way to be seen as limiting. It may for instance be implemented as part of software and/or hardware controlling the camera 1.

The camera 1 is a so called PTZ surveillance camera, i.e. a surveillance camera able to pan, tilt and zoom. To this end, the camera head 2 is movable in relation to the camera base 3. Movable should be interpreted in the widest possible sense, e.g. an operator may turn the camera head 2 by hand or the camera head movement may be motorized and controlled by inputting a chosen view direction via a user interface. Further, the camera head 2 may be moved based on a pre-set guard tour, or it may be moved based on some other type of input, such as from motion sensors or heat detectors sensing that an object has entered in a possible view direction of the camera 1 and the camera 1 is then pointed in that direction.

The position of the camera head 2 in relation to the camera base 3 may also be set once and for all during set-up of a surveillance camera, and the illumination device may then use the same view direction settings during its entire life span. This may lead to the situation of not using certain light emitting elements, but this may still be more cost efficient than to design and assemble an adapted illumination device.

Assuming that the camera 1 in fig. 1 and 2 is horizontally mounted, changing the pan position of the camera 1 will move the view angle 7 along a horizontal circle. In fig. 2, the camera of fig. 1 is shown from above (or, as it may be, below, if the camera is mounted e.g. in a ceiling), and when the camera pans, the camera head 2 is turned along a circle 8 in turn rotating the camera view angle 7 so that the camera 1 may scan the surrounding environment 360°.

In a tilt motion the camera 1 instead moves its view angle 7 in a vertical direction, e.g. upwards or downwards, along the line 9. The pan and tilt motions may obviously be combined.

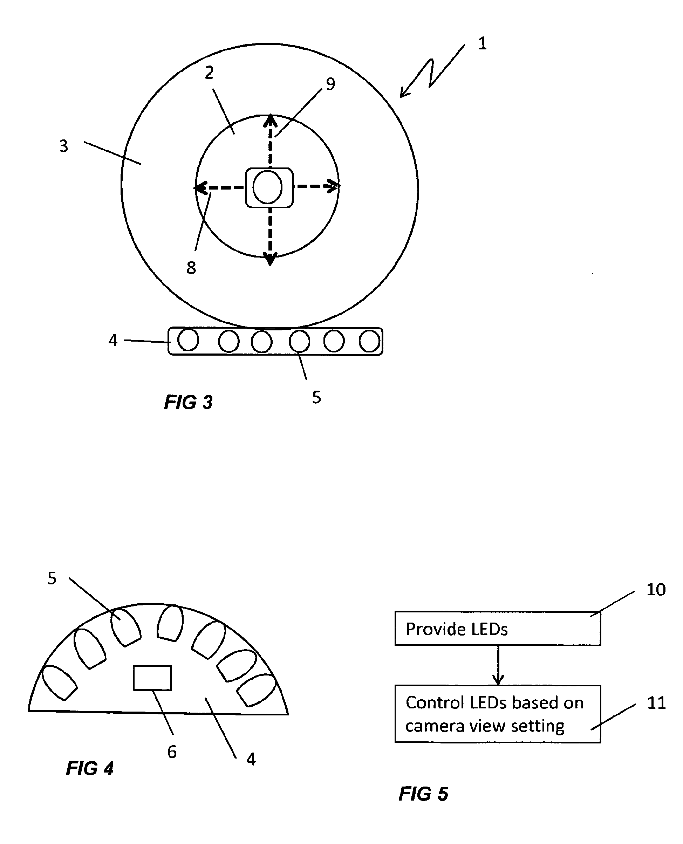

For a vertically mounted camera, as shown in fig. 3 and 4, the camera head 2 turns from left to right and vice versa in order to make the camera view angle move along the horizontal line 8 when the camera 1 pans. When the camera head 2 tilts, it moves the view angle upwards or downwards, along the vertical line 9. Also here the pan and tilt motions may be combined in any suitable manner.

For the vertically mounted camera 1, the light emitting elements 5 of the illumination device 4 may as shown in fig. 4 be mounted on a curved or arched shape, e.g. on a vertical line along a dome-shaped or an arch-shaped structure. For sake of simplicity, this is shown below the camera base in fig. 3, but it may be placed in any convenient position on or beside the camera base. It may also be part of the camera base 3. The position of the illumination device may enable coverage of all different camera view directions, or selected parts thereof.

It may be noted that the terms vertical and horizontal are to be interpreted as including a reasonable deviation from the vertical or horizontal plane. As an example, a deviation of e.g. 20° from the vertical or horizontal plane would not in any major way affect the operation and applicability of illumination device as presented herein. These terms may also be read as essentially vertical or essentially horizontal, but for sake of simplicity, the terms horizontal and vertical have been used throughout the application.

When the camera 1 is used in a poorly lit surrounding, extra illumination may be needed in order to get a good picture of any objects in the environment. This illumination is provided by the illumination device 4. In order to lower the power consumption and reduce the heat generated by the illumination device 4, the output of the light emitting elements 5 is individually controllable based on the camera view direction settings, e.g. such that only those light emitting elements which are useful for illuminating the objects that the camera is currently viewing are lit. The pan position along the circle 8 of the camera head 2 is used as input to the control unit 6.

The camera view direction setting, including, but not limited to a pan position, may be obtained from position sensors which are arranged for determining the camera view direction settings. Such position sensors may for instance be placed such that they sense the position of a motor which moves the camera head 2. If a manually moveable lens is used, position sensors may be arranged to sense the physical position of the lens.

Information regarding the camera view direction setting may also be obtained from camera control unit which also may be adapted to control the view direction of the camera. This camera control unit may e.g. base its view direction control on input from an operator, from information on a pre-set guard tour, or from some type of sensors, such as motion sensors or heat detection sensors. The camera control unit may then control both the camera 1 and the illumination device 4 to certain directions.

As a further option, advanced image processing can be used on the image captured by the camera to determine the view direction setting of the camera and where the illumination is needed. For instance, if the image processing gives as a result that the camera is currently monitoring one of a number of different areas in a room, the illumination device may then use that information to direct the illumination towards that area. The image processing may take place in the illumination control unit 6, or e.g. in a external unit which extracts relevant camera view direction settings for the illumination control unit.

As a further alternative, an operator may input the camera view direction setting to the illumination control unit. This could for instance be the case when a movable camera head is manually moved to a certain view direction at the time of installation and where the operator indicates the camera view direction setting on a monitoring screen in a control tool, as input to the illumination control unit.

It is also possible to use the camera field of view, e.g. in the form of a camera field of view setting, such as a setting of a zoom lens in the camera, as input to the control unit 6. When the zoom setting of the camera 1 indicates that a wide angle view is used, a wider range of light emitting elements 5 may be used, and when a telephoto setting is used, which indicates that a smaller viewing angle is used, fewer light emitting elements 5 may be used. An alternative to this, which is applicable e.g. when interchangeable lenses are used in the camera, is to control the illumination device 4 so that the use of a wide angle or a fish eye lens means that a wider range of light emitting elements 5 are used, and the use of a telephoto lens means fewer light emitting elements 5 are activated.

It may be noted that the light emitting elements 5 are activated or inactivated separately, independent of other light emitting elements 5. In some instances, the light emitting elements 5 may be grouped into groups of e.g. three elements and the elements in each group may be jointly controlled.

Fig. 2 illustrates one example of how the light emitting elements 5a which provide illumination in the view direction of the camera 1 are lit. In fig. 2 the remaining light emitting elements 5 are not lit. It is also possible to adjust the output intensity of the light emitting elements 5 e.g. such that those elements that are close to the view direction are lit to say half their maximum strength, thus providing softer illumination along the border of the picture captured by the camera 1. It is also possible to only reduce the strength of radiation from such light emitting elements that are not pointing in the view direction of the camera and not entirely inactivate them. The power savings and heat reduction will then be slightly less for obvious reasons.

The same principles apply to the illumination device 4 as shown in fig. 3 and 4. In this case the pan position along the line 8 is used in the same manner as for the horizontally mounted camera for controlling the light emitting elements 5, such that those elements along the curve-shape that point in the view direction of the camera are lit.

It may be noted that the illumination device 4 may comprise further light emitting elements 5 adapted for directing light in different tilt directions, in case this would be useful. Such an illumination device 4 could then comprise a number of light emitting elements 5 mounted along a vertical line in a curve-shape which corresponds to the different tilt positions of the camera 1. Another way of ascertaining that the illumination covers the tilt position of the camera 1 is to choose light emitting elements 5 which have such an angle of illumination that the desired tilt range is covered.

Fig. 5 illustrates a method according to embodiments of the invention. In a first step 10, a plurality of light emitting elements, e.g. in the form of LEDs are provided. In a second step 11, the output intensity of these light emitting elements are individually controlled based on a camera view setting, such that illumination is provided in a view direction of the camera. The view direction setting, as described above, comprises a pan position of the camera head. In addition to the view direction setting, a field of view setting, such as a zoom setting or zoom value of a zoom lens in the camera may also be used as described previously.

It may be noted that information regarding the level of intensity of the ambient light may also be used as input for controlling the light emitting elements 5. When the camera 1 e.g. is used in low light conditions, such as during dusk or dawn, the ambient light alone might not be strong enough for the camera 1 to maintain a proper quality of the captured image, but it may still be possible to lower the output intensity of the illumination device 4, e.g. by lighting only every second or every third element which is directed for illumination in the camera view direction, or by lowering the output intensity of selected light emitting elements. This makes it possible to maintain a good image quality, while achieving reductions in power consumption and heat generation.

Using information on the ambient light intensity may also help in reducing the risk of the camera capturing an overexposed picture. Other input on which the control unit may base its control of the light emitting elements are e.g. the focal distance used in the camera, the exposure time and gain. The ambient temperature may also be used as a parameter when deciding the light intensity. This since at lower ambient temperatures the system will be able to withstand more heat produced by the illumination device without any negative effects and, thus, higher illumination intensity may be applied. At higher ambient temperatures the opposite would apply. Further input parameters for the illumination control unit may also be available.

## Claims

1. A PTZ camera (1), arranged for monitoring a scene, comprising
a camera head (2) movably mounted on a camera base (3),
an illumination device (4) comprising
a plurality of light emitting elements (5), and
an illumination control unit (6),
wherein the illumination control unit (6) is arranged to control the output intensity of the plurality of light emitting elements (5),
**characterized in that** the illumination control unit is arranged to individually control the output intensity of the plurality of light emitting elements (5) based on a camera view direction setting comprising a camera pan position, such that illumination is provided in a view direction of the camera (1).

2. The camera according to claim 1, wherein the illumination control unit (6) is additionally arranged to individually control the plurality of light emitting elements (5) based on a camera field of view setting, such as a zoom value or a zoom setting of a zoom lens in the camera.

3. The camera according to any of the preceding claims, wherein the light emitting elements (5) are mounted on the camera base (3).

4. The camera according to claim 3, wherein the light emitting elements (5) are mounted in a ring-shape or partial ring shape, surrounding at least part of the camera head (2).

5. The camera according to any of claims 1-3, wherein the light emitting elements (5) are mounted along a curve-shape corresponding to a camera pan position span.

6. The camera according to any of the preceding claims, wherein the light emitting elements (5) are light emitting diodes, LEDs.

7. The camera according to any of the preceding claims, wherein the light emitting elements (5) are adapted to emit radiation in the infra-red or near infra-red spectrum.

8. The camera according to any of claims 1-7, wherein the light emitting elements (5) are arranged into groups, and wherein the illumination control unit (6) is arranged to jointly control the light emitting elements (6) within each group.

9. A method of illuminating a scene monitored by a PTZ camera having a camera head movably mounted on a camera base, comprising the steps of
providing (10) a plurality of light emitting elements,
controlling (11) the output intensity of the plurality of light emitting elements
**characterized in that** the step of controlling the output intensity comprises individually controlling the output intensity of the plurality of light emitting elements based on a camera view direction setting comprising a camera pan position, such that illumination is provided in a view direction of the camera.

10. The method according to claim 9, further comprising the step of receiving information regarding the camera view direction setting from position sensors arranged for determining the camera view direction setting.

11. The method according to claim 9 or 10, further comprising the step of receiving information regarding the camera view direction setting from a camera control unit arranged to control the camera view direction setting.

12. The method according to any of claims 9-11, further comprising the step of determining the camera view direction setting based on image processing of an image captured by the camera.

13. The method according to any of claims 9-12, further comprising the steps of
receiving information regarding ambient light intensity, and
controlling the plurality of light emitting elements such that a total output intensity of the illumination device is lowered if the ambient light intensity exceeds a predetermined level.

## Patentansprüche

1. PTZ-Kamera (1), die dafür konfiguriert ist, eine Szene zu überwachen, wobei die Kamera Folgendes umfasst:
einen Kamerakopf (2), der beweglich auf einer Kamerabasis (3) montiert ist,
eine Beleuchtungsvorrichtung (4), die Folgendes umfasst:
mehrere lichtaussendende Elemente (5), und
eine Beleuchtungssteuereinheit (6),
wobei die Beleuchtungssteuereinheit (6) dafür ausgelegt ist, die Ausgabeintensität der mehreren lichtaussendenden Elemente (5) zu steuern,
**dadurch gekennzeichnet, dass** die Beleuchtungssteuereinheit dafür konfiguriert ist, die Ausgabeintensität der mehreren lichtaussendenden Elemente (5) individuell auf der Grundlage einer Kamerablickrichtungseinstellung zu steuern, die eine Kameraschwenkposition umfasst, dergestalt, dass eine Beleuchtung in einer Blickrichtung der Kamera (1) ausgesendet wird.

2. Kamera nach Anspruch 1, wobei die Beleuchtungssteuereinheit (6) zusätzlich dafür ausgelegt ist, die mehreren lichtaussendenden Elemente (5) individuell auf der Grundlage einer Kamerasichtfeldeinstellung zu steuern, wie zum Beispiel ein Zoomwert oder eine Zoomeinstellung eines Zoomobjektivs der Kamera.

3. Kamera nach einem der vorangehenden Ansprüche, wobei die lichtaussendenden Elemente (5) an der Kamerabasis (3) montiert sind.

4. Kamera nach Anspruch 3, wobei die lichtaussendenden Elemente (5) in einer Ringform oder teilweisen Ringform montiert sind und mindestens einen Abschnitt des Kamerakopfes (2) umgeben.

5. Kamera nach einem der Ansprüche 1-3, wobei die lichtaussendenden Elemente (5) entlang einer Kurvenform montiert sind, die dem Bereich einer Kameraschwenkposition entspricht.

6. Kamera nach einem der vorangehenden Ansprüche, wobei die lichtaussendenden Elemente (5) Leuchtdioden (LEDs) sind.

7. Kamera nach einem der vorangehenden Ansprüche, wobei die lichtaussendenden Elemente (5) dafür geeignet sind, Strahlung im infraroten oder nahe-infraroten Spektrum auszusenden.

8. Kamera nach einem der Ansprüche 1-7, wobei die lichtaussendenden Elemente (5) in Gruppen angeordnet sind, und wobei die Beleuchtungssteuereinheit (6) dafür konfiguriert ist, die lichtaussendenden Elemente (6) innerhalb jeder Gruppe gemeinsam zu steuern.

9. Verfahren zum Beleuchten einer Szene, die durch eine PTZ-Kamera überwacht wird, die einen Kamerakopf aufweist, der beweglich an einer Kamerabasis montiert ist, wobei das Verfahren folgende Schritte umfasst:
Bereitstellen (10) mehrerer lichtaussendender Elemente,
Steuern (11) der Ausgabeintensität der mehreren lichtaussendenden Elemente,
**dadurch gekennzeichnet, dass** der Schritt des Steuerns der Ausgabeintensität umfasst, die Ausgabeintensität der mehreren lichtaussendenden Elemente individuell auf der Grundlage einer Kamerablickrichtungseinstellung, die eine Kameraschwenkposition umfasst, dergestalt zu steuern, dass eine Beleuchtung in einer Blickrichtung der Kamera ausgegeben wird.

10. Verfahren nach Anspruch 9, das des Weiteren den Schritt umfasst, Informationen über die Kamerablickrichtungseinstellung von Positionssensoren zu empfangen, die dafür konfiguriert sind, die Kamerablickrichtungseinstellung festzulegen.

11. Verfahren nach Anspruch 9 oder 10, das des Weiteren den Schritt umfasst, Informationen über die Kamerablickrichtungseinstellung von einer Kamerasteuereinheit zu empfangen, die dafür konfiguriert ist, die Kamerablickrichtungseinstellung zu steuern.

12. Verfahren nach einem der Ansprüche 9-11, das des Weiteren den Schritt umfasst, die Kamerablickrichtungseinstellung auf der Grundlage einer Bildverarbeitung eines durch die Kamera aufgenommenen Bildes festzulegen.

13. Verfahren nach einem der Ansprüche 9-12, das des Weiteren folgende Schritte umfasst:
Empfangen von Informationen über die Umgebungslichtintensität, und
Steuern der mehreren lichtaussendenden Elemente dergestalt, dass eine Ausgabe-Gesamtintensität der Beleuchtungsvorrichtung verringert wird, wenn die Umgebungslichtintensität einen zuvor festgelegten Pegel übersteigt.

## Revendications

1. Caméra PTZ (1), agencée pour surveiller une scène, comprenant :
une tête caméra (2) montée de manière à pouvoir se déplacer sur une base de caméra (3),
un dispositif d'illumination (4) comprenant :
une pluralité d'éléments électroluminescents (5), et
une unité de commande d'illumination (6),
dans laquelle l'unité de commande d'illumination (6) est agencée pour commander l'intensité de sortie de la pluralité d'éléments électroluminescents (5),
**caractérisée en ce que** l'unité de commande d'illumination est agencée pour commander individuellement l'intensité de sortie de la pluralité d'éléments électroluminescents (5) sur la base d'un réglage de direction de vision de caméra comprenant une position panoramique de caméra, de sorte qu'une illumination soit fournie dans une direction de vision de la caméra (1).

2. Caméra selon la revendication 1, dans laquelle l'unité de commande d'illumination (6) est en outre agencée pour commander individuellement la pluralité d'éléments électroluminescents (5) sur la base d'un réglage de champ de vision de caméra, comme une valeur de zoom ou un réglage de zoom d'une lentille de zoom dans la caméra.

3. Caméra selon l'une quelconque des revendications précédentes, dans laquelle les éléments électroluminescents (5) sont montés sur la base de caméra (3).

4. Caméra selon la revendication 3, dans laquelle les éléments électroluminescents (5) sont montés en forme d'anneau ou en forme d'anneau partiel, entourant au moins une partie de la tête de caméra (2).

5. Caméra selon l'une quelconque des revendications 1 à 3, dans laquelle les éléments électroluminescents (5) sont montés le long d'une forme de courbe correspondant à une étendue de position panoramique de caméra.

6. Caméra selon l'une quelconque des revendications précédentes, dans laquelle les éléments électroluminescents (5) sont des diodes électroluminescentes, LED.

7. Caméra selon l'une quelconque des revendications précédentes, dans laquelle les éléments électroluminescents (5) sont aptes à émettre un rayonnement dans le spectre infrarouge ou proche infrarouge.

8. Caméra selon l'une quelconque des revendications 1 à 7, dans laquelle les éléments électroluminescents (5) sont agencés en groupes, et dans laquelle l'unité de commande d'illumination (6) est agencée pour commander conjointement les éléments électroluminescents (6) à l'intérieur de chaque groupe.

9. Procédé d'illumination d'une scène surveillée par une caméra PTZ comportant une tête de caméra montée de manière à pouvoir se déplacer sur une base de caméra, comprenant les étapes de :
la fourniture (10) d'une pluralité d'éléments électroluminescents,
la commande (11) de l'intensité de sortie de la pluralité d'éléments électrol um inescents,
**caractérisé en ce que** l'étape de la commande de l'intensité de sortie comprend la commande de l'intensité de sortie de la pluralité d'éléments électroluminescents individuellement sur la base d'un réglage de direction de vision de caméra comprenant une position panoramique de caméra, de sorte qu'une illumination soit fournie dans une direction de vision de la caméra.

10. Procédé selon la revendication 9, comprenant en outre l'étape de la réception d'informations concernant le réglage de direction de vision de caméra à partir de capteurs de position agencés pour déterminer le réglage de direction de vision de caméra.

11. Procédé selon la revendication 9 ou 10, comprenant en outre l'étape de la réception d'informations concernant le réglage de direction de vision de caméra à partir d'une unité de commande de caméra agencée pour commander le réglage de direction de vision de caméra.

12. Procédé selon l'une quelconque des revendications 9 à 11, comprenant en outre l'étape de la détermination du réglage de direction de vision de caméra sur la base d'un traitement d'image d'une image acquise par la caméra.

13. Procédé selon l'une quelconque des revendications 9 à 12, comprenant en outre les étapes de :
la réception d'informations concernant une intensité de lumière ambiante, et
la commande de la pluralité d'éléments électroluminescents de sorte qu'une intensité de sortie totale du dispositif d'illumination soit réduite si l'intensité de lumière ambiante dépasse un niveau prédéterminé.
